# EUROPEAN PATENT APPLICATION

(11) **EP 2 509 084 A1**
(43) Date of publication of application: **10.10.2012**
(21) Application number: 10834536.4
(22) Date of filing: 29.11.2010
(51) Int. Cl.: H01G 9/155, H01G 9/12, H01M 2/12

(54) **ELECTRICITY STORAGE DEVICE AND METHOD FOR MANUFACTURING ELECTRICITY STORAGE DEVICE**

(30) Priority: 03.12.2009 JP 2009275328
(71) Applicant: UD Trucks Corporation, Saitama 362-8523 (JP)
(72) Inventor: ARAKI, Shuichi, Ageo-shi Saitama 362-8523 (JP); TAKEDA, Masami, Ageo-shi Saitama 362-8523 (JP); SUGIHASI, Yuji, Ageo-shi Saitama 362-8523 (JP); TSUCHIYA, Takayuki, Ageo-shi Saitama 362-8523 (JP)
(74) Representative: Grünecker, Kinkeldey, Stockmair & Schwanhäusser
(86) International application number: PCT/JP2010/071231
(87) International publication number: WO 2011/068086

(57) **Abstract**

A storage module is constituted by a plurality of storage cells housed respectively in resin cases. A storage device includes a flexible tube that is welded to the respective cases and connected to the respective storage cells in order to discharge a gas from the respective storage cells, and a valve that opens and shuts off discharge of the gas from the tube. As a result, a gas vent pipe structure exhibiting a superior sealing property is realized.

## Description

### FIELD OF THE INVENTION

This invention relates to a pipe structure for discharging gas from a plurality of storage cells made of electric double-layer capacitors or various other types of storage batteries.

### BACKGROUND OF THE INVENTION

Following prior art references (1) to (5) disclose cases for housing a plurality of storage cells made of electric double-layer capacitors or various other types of storage batteries. The cases are made of flexible laminate film. Each of the storage cells is housed in each of the cases. The plurality of storage cells thus housed in the cases form a storage module.

(1) JP2006-278618A
(2) JP2003-272968A
(3) JP2004-303758A (Japan Patent Serial No. 4185793)
(4) JP2004-278690A (Japan Patent Serial No. 3927139)
(5) JP2002-334683A

In this type of storage module, gas generated as a result of an electrochemical reaction in each storage cell must be discharged to the outside.

The prior art references (1), (2), and (4) disclose a gas vent hole formed in a case of each storage cell to discharge gas to the outside, and a gas vent valve interposed in the gas vent hole. The gas vent valve is constituted by a check valve that opens in response to an increase in an internal pressure of the case, for example.

In this case, identical numbers of gas vent valves to those of the storage cells are required, and when the number of storage cells increases, the number of gas vent valves increases, leading to an increase in product cost.

The reference (4), meanwhile, discloses a gas vent pipe connected to respective cases of a plurality of storage cells and a single gas vent valve provided in the gas vent pipe.

According to this prior art reference, the number of gas vent valves can be reduced.

### SUMMARY OF THE INVENTION

However, when laminate film made of nylon, polypropylene, or the like is used for the case, it is difficult to fix the gas vent pipe to the case.

It is therefore an object of this invention to realize a gas vent pipe structure that exhibits a superior sealing property and enables a gas vent pipe to be fixed to a case easily.

In order to achieve the above object, this invention provides a storage device comprising a storage module comprising a plurality of storage cells housed respectively in resin cases made of thermoplastic resin, a flexible tube that is formed from a laminate film including a thermoplastic resin layer and welded to the respective cases in order to discharge a gas from the respective storage cells, and a valve that opens and shuts off discharge of the gas from the tube.

The details as well as other features and advantages of this invention are set forth in the remainder of the specification and are shown in the accompanying drawings.

### BRIEF DESCRIPTION OF THE DRAWINGS

FIG. 1 is a schematic perspective view of a storage device according to an embodiment of this invention.

FIG. 2 is a front view of a storage cell according to the embodiment of this invention.

FIG. 3 is a vertical sectional view of the storage cell, taken along a line III-III in FIG. 2.

FIG. 4 is a plan view of the storage cell seen from above.

FIG. 5 is an exploded perspective view of a tube according to the embodiment of this invention.

FIG. 6 is similar to FIG. 5, but shows a condition in which a sheet according to the embodiment of this invention is folded.

FIG. 7 is a sectional view of the sheet.

FIG. 8 is a cross-sectional view of a case and the sheet, showing a process for welding the sheet to the case according to the embodiment of this invention.

FIG. 9 is similar to FIG. 8, but shows a welding process performed when respective ends of the sheet are overlapped.

FIG. 10 is a cross-sectional view of the tube, showing a process for welding a valve to the tube according to the embodiment of this invention.

FIG. 11 is a perspective view of a tube during manufacture using two sheets and a connecting sheet according to a second embodiment of this invention.

FIG. 12 is similar to FIG. 11, but shows the two sheets after the connecting sheet has been applied.

### DESCRIPTION OF THE PREFERRED EMBODIMENTS

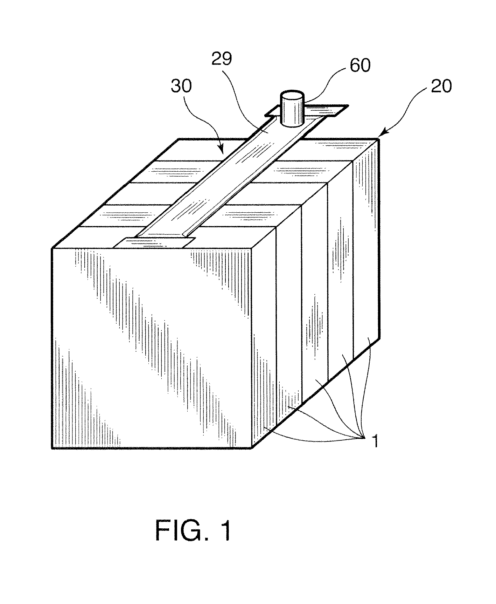

Referring to FIG. 1 of the drawings, a storage device comprises a storage module 20 and a flexible tube 30. The storage module 20 is constituted by five laminated storage cells 1. Electric double-layer capacitors are used as the storage cells 1. The storage cells 1 are not limited to electric double-layer capacitors, and various other types of storage batteries may be used.

The tube 30 is connected to the respective storage cells 1. The tube 30 functions as a gas vent pipe for discharging gas from the respective storage cells 1.

A resin valve 60 having a check valve function is welded to the tube 30.

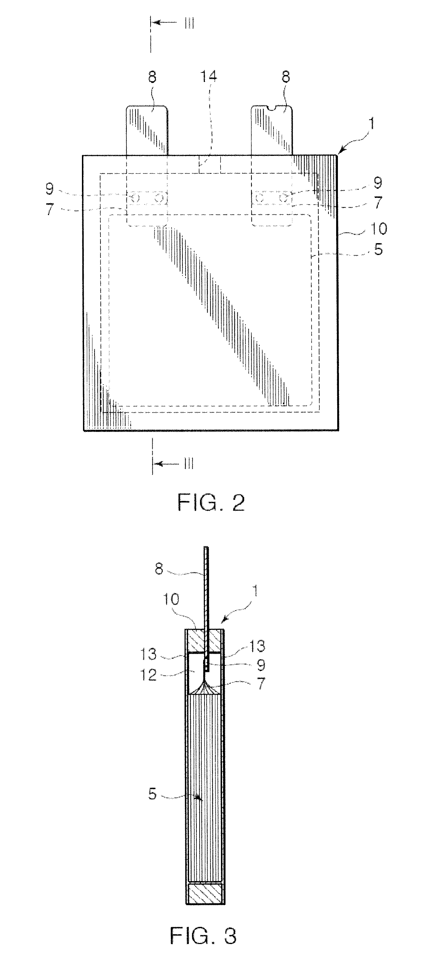

Referring to FIGS. 2-4, the storage cell 1 comprises a storage element 5 that stores a charge, and a case 10 housing the storage element 5.

The storage element 5 is housed in the case 10 together with an electrolyte. The storage element 5 is constituted by a laminated body formed by laminating a predetermined number of rectangular positive electrode bodies and negative electrode bodies and separators interposed therebetween. The storage element 5 is constituted by an electric double-layer capacitor that stores a charge, or in other words electric energy, using electrostatic capacitance generated by an electrical double layer in both electrodes, i.e. both the positive electrode body and the negative electrode body, and discharges the stored charge. The separator is formed from paper, a resin sheet, or the like, and is interposed between the positive electrode body and the negative electrode body.

The positive electrode body and the negative electrode body are respectively constituted by polarized electrodes having an electrical double layer on a surface thereof. The polarized electrode is constituted by activated carbon formed in a rectangular plate shape. The electrostatic capacitance of the electric double-layer capacitor can be increased by employing activated carbon, which has an extremely large specific surface area, as the polarized electrode. A collector electrode 7 is connected to the polarized electrode. The collector electrode 7 is constituted by strip-form metal foil such as aluminum foil, for example.

Homopolar collector electrodes 7 are bundled together in the case 10 and connected by welding or the like, for example, to an electrode terminal 8 of a corresponding polarity via a joint portion 9. The electrode terminal 8 is constituted by strip-form metal foil such as aluminum foil, for example. A pair of electrode terminals 8 constituted by a positive electrode and a negative electrode project to an outer side of the case 10. One of the pair of electrode terminals 8 shown in FIGS. 2 and 3 corresponds to the positive electrode, and the other corresponds to the negative electrode.

The case 10 is formed from a substantially rectangular resin frame corresponding to an outer shape of the storage element 5. The resin used for the frame is a thermoplastic resin such as polypropylene (PP) or the like. The case 10 is sufficiently rigid to be self-standing. Opening portions in a front surface and a back surface of the case 10, or in other words opening portions in a lamination direction of the storage cells 1, are respectively closed by laminate film sheets 13 that are adhered to the frame and have a substantially identical shape to an outer shape of the frame. The storage element 5 is housed in a space 12 on an inner side of the case 10. The storage module 20 shown in FIG. 1 is constructed by laminating the storage cells 1 such that the sheets 13 of storage cells 1 having adjacent sheets 13 overlap.

In this embodiment, the storage element 5 has a rectangular cross-section, but a cross-sectional shape of the storage element 5 may be set as desired. For example, the cross-sectional shape of the storage element 5 may be circular. In this case, the case 10 is formed as a circular frame.

The case 10 is insert-molded in a condition where the pair of metallic electrode terminals 8 project to the outside through one side of the frame.

A gas escape hole 14 is formed in a site corresponding to a center of an upper side of the case 10 with respect to the storage device shown in FIG. 1. This site is located between the pair of electrode terminals 8 in FIGS. 2 and 3.

When assembling the storage cell 1, the laminate film sheets 13 are adhered to the case 10 as follows. First, the sheets 13 are disposed respectively on the front surface and the back surface of the case 10, whereupon the sheets 13 are heated while being pressed against the case 10 by a pair of heaters. As a result of this processing, resin on a surface of the sheets 13 is fused with resin on a surface of the case 10. The fused resin is then cooled and hardened, whereby the sheets 13 are adhered tightly to the case 10 without gaps.

After adhering the sheets 13 to the case 10, the electrolyte is injected into the case 10 through the gas escape hole 14, for example.

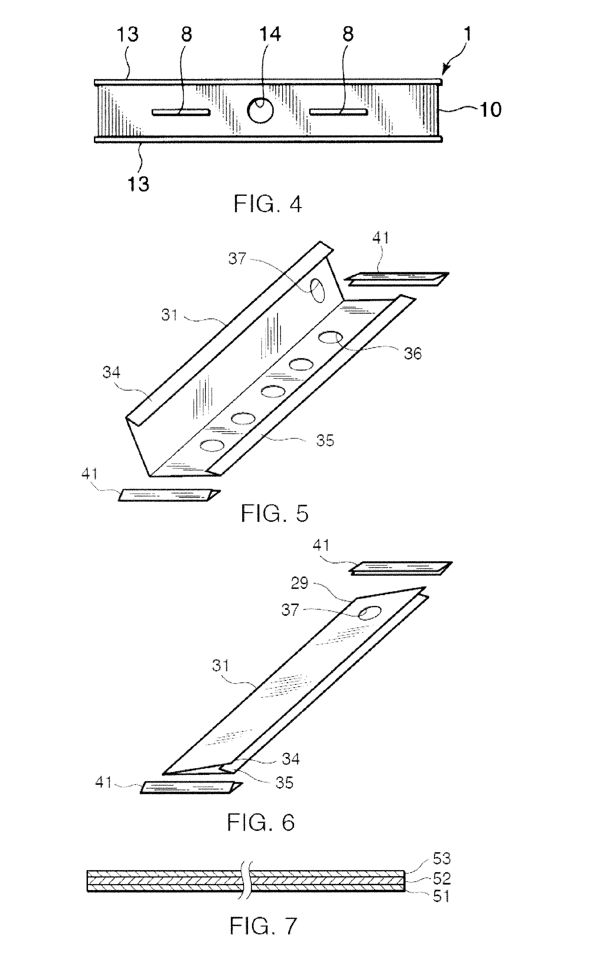

Referring to FIGS. 5 and 6, the tube 30 is formed by folding a flexible, rectangular laminate film sheet 31 into two, overlapping end portions 34 and 35 of the sheet 31 positioned on either side of a folding line, and then welding the end portions 34 and 35 together. Separate rectangular sheets 41 formed from identical laminate film are then welded to either axial end of the tube 30 in order to close axial direction opening portions on either end of the tube 30 thus formed.

Referring to FIG. 7, the laminate film used for the sheets 31 and 41 is constituted by a laminated body including an outer surface resin layer 51, a metal intermediate layer 52, and an inner surface resin layer 53.

The metal intermediate layer 52 is made of metal foil such as aluminum foil, for example, and serves to prevent gas from permeating the film.

The outer surface resin layer 51 has a lower melting point than the inner surface resin layer 53. The outer surface resin layer 51 is made of a resin having a low melting point, such as polypropylene (PP) or polyethylene (PE). More preferably, an identical thermoplastic resin to that used for the case 10 is also used for the outer surface resin film 51.

The inner surface resin layer 53 is made of a resin having a high melting point, such as nylon.

The tube 30 is constructed using the single rectangular sheet 31 and the two rectangular sheets 41.

Referring to FIG. 5, five holes 36 are formed in the sheet 31 in advance in positions corresponding to the gas escape holes 14 in the respective cases 10.

Referring to FIG. 6, the sheet 31 is folded in two such that the outer surface resin layer 51 is exposed to the outside, and the end portions 34 and 35 of the sheet 31 positioned on either side of the folding line are folded inward. By welding the end portions 34 and 35 to each other, the tube 30 is formed with a flat cross-sectional shape. The rectangular sheets 41 are folded in two such that the outer surface resin layer 51 face each other, and then welded to the tube 30 so as to sandwich the end portions 34 and 35 of the sheet 31, thereby closing the open ends of the tube 30.

The tube 30 formed in this manner is fixed to the cases 10 of the respective storage cells 1 by welding.

Referring back to FIG. 1, the tube 30 is formed to be longer than a lamination direction dimension of the storage module 20, and therefore includes a projecting portion 29 that projects in the lamination direction from an end surface of the storage module 20. The resin valve 60 is fixed to the projecting portion 29 by welding.

Referring back to FIG. 5, in order to connect the valve 60, a hole 37 is formed in advance in the case 31 in a position corresponding to the valve 60. The valve 60 is welded to a periphery of the hole 37.

During charging and discharging of the storage module 20 in the storage device thus configured, gas generated in the respective storage cells 1 flows into the tube 30 through the gas escape holes 14 and is discharged to the outside from the tube 30 through the valve 60 having a check valve function. The check valve function of the valve 60 is set to allow the gas to be discharged from the tube 30 while preventing gas from flowing into the tube 30.

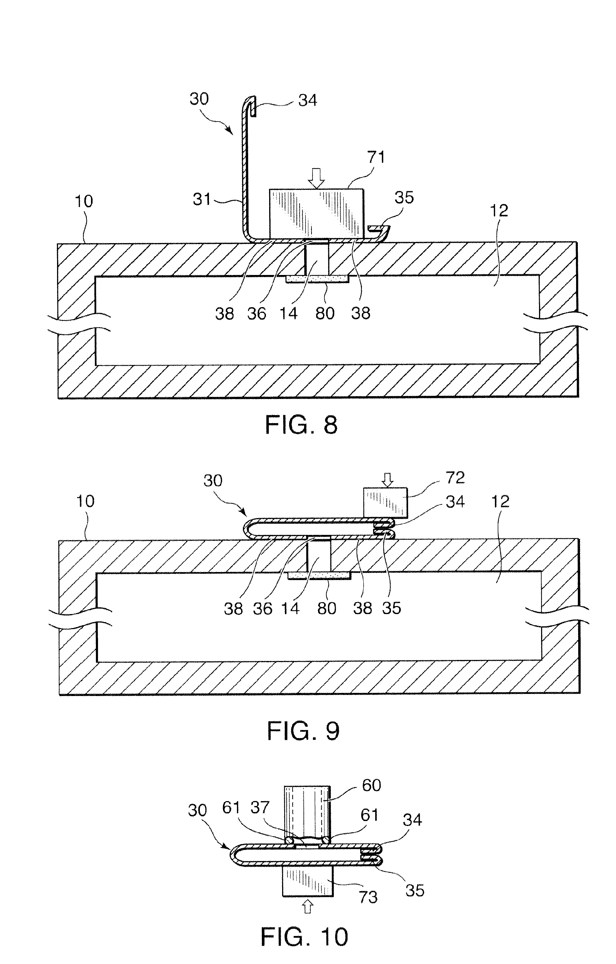

Referring to FIGS. 8-10, an assembly process of the tube 30 will be described. The assembly process is performed in order of a process for welding a part of the sheet 31 to the case 10, a process for welding the tube 30, and a process for welding the valve 60.

### (1) Process for welding a part of the sheet 31 to the case 10

Referring to FIG. 8, a part of the sheet 31 that forms a lower surface of the tube 30 with respect to the storage device shown in FIG. 1 is welded to an upper surface of the case 10 using a heater 71. More specifically, the sheet 31 is placed on the upper surface of the case 10 such that the holes 36 in the sheet 31 and the gas escape holes 14 in the case 10 overlap, whereupon a welding surface of the sheet 31 is heated while being pressed against the case 10 by the heater 71, as shown by an arrow in the figure. As a result, the low melting point outer surface resin layer 51 of the tube 30 is fused with resin on the upper surface of the case 10, and by cooling and hardening the fused resin, welded portions 38 are formed between the tube 30 and the case 10 on the periphery of the holes 36 in the sheet 31 and the gas escape holes 14 in the case 10. The tube 30 is adhered tightly to the case 10 without gaps by the welded portions 38.

### (2) Process for welding the tube 30

Referring to FIG. 9, the end portions 34 and 35 are overlapped, whereupon the end portions 34 and 35 are heated while being pressed together using a heater 72. As a result, the mutually contacting low melting point outer surface resin layers 51 of the end portions 34 and 35 are fused, and by cooling and hardening the fused resin, the end portions 34 and 35 are welded together without gaps.

In the tube 30 formed in this manner, the low melting point outer surface resin layer 51 of the sheet 31 constitutes an outer surface of the tube 30 while the high melting point inner surface resin layer 53 of the sheet 31 constitutes an inner surface of the tube 30. Hence, in all sites of the tube 30 excluding the end portions 34 and 35, the outer surface resin layers 51 are not welded together.

Following the operation described above, the axial end portions of the tube 30 are sandwiched between the sheets 41 folded in two, and in this condition, the sheets 41 are heated. The sheets 41 are folded in advance such that the outer surface resin layers 51 oppose each other, and by welding respective outer sides of the folded sheets 41 in a cross-sectional direction of the tube 30 to each other and then welding the outer surface resin layer 51 constituting the outer surface of the tube 30 to the outer surface resin layers 51 of the sheets 41, the open ends of the tube 30 are tightly closed.

A second embodiment of this invention relating to the process for welding the tube 30 will now be described.

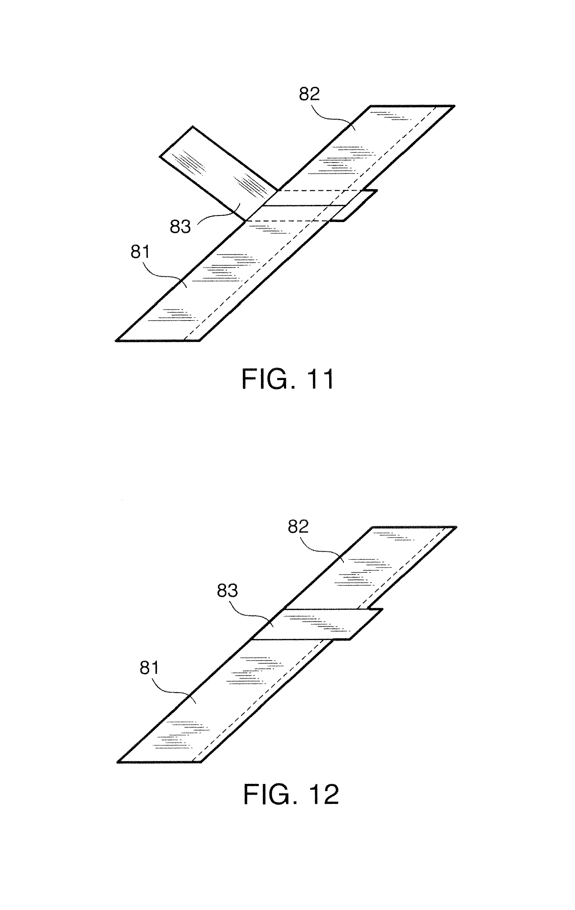

Referring to FIGS. 11 and 12, instead of the sheet 31 according to the first embodiment of this invention, a single sheet is constructed using two sheets 81 and 82 formed from laminate film and a connecting sheet 83 formed from laminate film and provided to connect the two sheets 81 and 82. The sheets 81 and 82 and the connecting sheet 83 are all made of identical laminate film to that of the sheet 31 according to the first embodiment.

The sheets 81 and 82 are folded in two and laid end to end, and in this condition, a joint portion between the sheets 81 and 82 is wrapped by the connecting sheet 83. At this time, the connecting sheet 83 wraps the joint portion between the sheets 81 and 82 such that the outer surface resin layer 51 of the connecting sheet 83 contacts the respective outer surface resin layers 51 of the sheets 81 and 82. A part wrapped by the connecting sheet 83 is then heated while being sandwiched from both sides by a heater, whereby the respective outer surface resin layers 51 of the sheets 81 and 82 are welded to the outer surface resin layer 51 of the connecting sheet 83. As a result, the sheets 81 and 82 are integrated via the connecting sheet 83.

### (3) Process for welding the valve 60

Referring to FIG. 10, the resin valve 60 is fixed by welding to the periphery of the hole 37, which is formed in a site corresponding to the upper surface of the tube 30 with respect to the storage device shown in FIG. 1.

The valve 60 is gripped by a jig, whereupon the tube 30 is brought into contact with the valve 60 such that the hole 37 opposes the valve 60. The tube 30 is then heated while being pressed against the valve 60 by a heater 73, as shown by an arrow in the figure. The tube 30 is crushed when pressed by the heater 73 such that the inner surface resin layers 53 are brought into close contact. As a result, heat from the heater 73 passes through the outer surface resin layer 51, metal intermediate layer 52, and inner surface resin layer 53 constituting one wall surface of the tube 30 so as to be transmitted to the inner surface resin layer 53, metal intermediate layer 52, and outer surface resin layer 51 constituting another wall surface of the tube 30. Accordingly, the outer surface resin layer 51 of the sheet 31 is fused to resin on a surface of the valve 60, and by cooling and hardening the fused resin, a ring-shaped welded portion 61 is formed between the tube 30 and the valve 60 on the periphery of the hole 37.

In the process for assembling the tube 30 described above, a temperature at which the heaters 71, 72, 73 heat the sheets 31 and 41 is set within a temperature region where the outer surface resin layer 51 melts but the inner surface resin layer 53 does not melt. By setting the temperature in this region, welding can be prevented in sites other than the welded portions 38 and 61, a welded portion between the end portions 34 and 35, and welded portions between the sheets 41 and the tube 30. As a result, a situation in which the inner surface resin layers 53 constituting an inner peripheral surface of the tube 30 are welded together, for example, such that a gas flow through the tube 30 is obstructed can be avoided.

The heaters 71, 72, 73 are constituted by heating plates that use heat generated by an electric heater, for example. A coating exhibiting superior heat resistance and wear resistance, such as a fluorinated ethylene resin material, for example, is applied in advance to contact surfaces of the heaters 71, 72, 73 that contact the sheets 31 and 41. This coating processing serves to prevent the sheets 31 and 41 from being welded to the contact surfaces.

The heaters 71, 72, 73 may be constituted by high frequency induction heaters, or in other words so-called IH heaters, that heat the aluminum intermediate layer of the laminate film by electromagnetic induction.

The tube 30 is formed by performing the processes described above in order, and when these processes are complete such that the tube 30 is connected to the cases 10 of the respective storage cells 1 and the valve 60 is connected to the tube 30, the storage module 20 is complete.

According to the storage module 20 described above, the tube 30 is fixed to the case 10 easily by combining the laminate film tube 30 with the resin case 10.

In the storage module 20, the tube 30 is formed with a flat cross-sectional shape by thermally welding the sheets 31 and 41. An amount of gas generated per unit time in each of the storage cells 1 is extremely small. Therefore, even though the cross-sectional shape of the tube 30 is flat, a sufficient flow sectional area can be provided to secure a smooth gas flow through the tube 30 from the respective storage cells 1 toward the valve 60.

Meanwhile, forming the tube 30 with a flat cross-sectional shape means that the tube 30 does not project greatly outward from the cross-section of the storage cell 1, and therefore the storage module 20 can be formed compactly.

It should be noted, however, that the tube 30 is not limited to a flat cross-sectional shape, and the tube 30 may be formed with a substantially circular or substantially polygonal cross-sectional shape. Likewise when the tube 30 is formed with these cross-sectional shapes, it is still possible to construct the tube 30 using the sheets 81 and 82 connected via the connecting sheet 83, as in the second embodiment. In this case, the connecting sheet 83 is preferably welded to the sheets 81 and 82 in a condition where the sheets 81 and 82 are wound around a core.

A connection portion where the tube 30 is connected to the case 10 is tightly sealed without gaps by the welded portions 38 formed on the periphery of the holes 36 and the gas escape holes 14. Hence, a gas vent pipe exhibiting a superior sealing property can be realized.

In the storage module 20, the single valve 60 is provided on the end portion of the tube 30, and therefore the number of valves can be greatly reduced in comparison with a case where a valve is provided for each storage cell 1. Hence, by employing the storage module 20, a manufacturing cost of the storage device can be reduced.

The contents of Tokugan 2009-275328, with a filing date of December 3, 2009 in Japan, are hereby incorporated by reference.

Although the invention has been described above with reference to certain embodiments, the invention is not limited to the embodiments described above. Modifications and variations of the embodiments described above will occur to those skilled in the art, within the scope of the claims.

For example, in the process for assembling the tube 30, the order of (1) the process for welding a part of the sheet 31 to the case 10 and (2) the process for welding the tube 30 may be switched. It should be noted, however, that in this case, the heater 71 is pressed against the low melting point outer surface resin layer 51 of the tube 30 in the process of (1), and therefore the heater 71 must be brought into contact with the tube 30 via a welding prevention layer made of fluorinated ethylene resin or the like.

### INDUSTRIAL FIELD OF APPLICATION

According to this invention, by combining a laminate film gas vent tube and a resin case as described above, a gas vent pipe structure that exhibits a superior sealing property and enables the gas vent tube to be fixed to the case easily is realized. This invention therefore brings about favorable effects when applied to a storage device for use in a vehicle and various other applications.

The embodiments of this invention in which an exclusive property or privilege is claimed are defined as follows:

## Claims

1. A storage device comprising:
a storage module (20) comprising a plurality of storage cells (1) housed respectively in cases (10) made of a thermoplastic resin;
a flexible tube (30) that is formed from a laminate film including a thermoplastic resin layer and welded to the respective cases (10) in order to discharge a gas from the respective storage cells (1); and
a valve (60) that opens and shuts off discharge of the gas from the tube (30).

2. The storage device as defined in Claim 1, wherein the tube (30) is constructed by overlapping and welding respective ends of a sheet (31) constituted by a laminate film.

3. The storage device as defined in Claim 2, further comprising another sheet (41) that is formed from a laminate film including a thermoplastic resin layer and welded to respective ends of the tube (30) in order to close opening portions at the respective ends of the tube (30).

4. The storage device as defined in any one of Claim 1 through Claim 3, wherein
the tube (30) has holes (36) formed in advance in a welding portion to be welded to the respective cases (10),
each case (10) includes a gas escape hole (14) formed in advance in a welding portion to be welded to the tube (30), and
the gas inside the respective cases (10) is discharged into the tube (30) through the gas escape holes (14) and the holes (36).

5. The storage device as defined in Claim 4, further comprising a gas-liquid separating film (80) covering the gas escape holes (14).

6. The storage device as defined in any one of Claim 1 through Claim 5, wherein each storage cell (1) includes a pair of electrode terminals (8) projecting to an outer side of the case (10), and the tube (30) is welded to the case (10) between the pair of electrode terminals (8).

7. The storage device as defined in any one of Claim 1 through Claim 6, wherein the tube (30) comprises:
a thermoplastic outer surface resin layer (51) exposed to an outer side;
an inner surface resin layer (53) having a higher melting point than the outer surface resin layer (51); and
a metal intermediate layer (52) sandwiched between the outer surface resin layer (51) and the inner surface resin layer (53).

8. The storage device as defined in any one of Claim 1 through Claim 7, wherein the tube (30) is constituted by two laminate film sheets (81, 82) divided in a longitudinal sectional direction, and a connecting sheet (83) that connects the two sheets (81, 82) in a joined condition.

9. A manufacturing method for the storage device as defined in Claim 2, wherein the tube (30) is formed by:
thermally welding a predetermined part of the sheet (31) to the case (10);
folding the sheet (31) in a middle thereof;
folding respective ends (34, 35) of the sheet (31) toward an inner side of the folded sheet (31); and
thermally welding the respective ends (34, 35) to each other while overlapped.

10. The manufacturing method for a storage device as defined in Claim 9, wherein the sheet (31) comprises:
an outer surface resin layer (51);
an inner surface resin layer (53) having a higher melting point than the outer surface resin layer (51); and
a metal intermediate layer (52) sandwiched between the outer surface resin layer (51) and the inner surface resin layer (53), and
the sheet (31) is folded in a middle thereof such that the outer surface resin layer (51) is exposed to an outer side.

11. The manufacturing method for a storage device as defined in Claim 10, wherein
the outer surface resin layer (51) in the predetermined part of the sheet (31) is welded to the case (10) by a heater contacting the inner surface resin layer (53),
the sheet (31) is folded in a middle thereof,
the outer surface resin layer (51) on an end (34) of the sheet (31) that is folded toward an inner side of the sheet (31) is overlapped with the outer surface resin layer (51) on another end (35), and
the two outer surface resin layers (51) are welded together by another heater.
